# DEMANDE DE BREVET EUROPEEN

(11) **EP 2 950 208 A1**
(43) Date de publication de la demande: **02.12.2015**
(21) Numéro de dépôt: 15248010.9
(22) Date de dépôt: 03.04.2015
(51) Int. Cl.: G06F 9/44, G06F 9/50, G06F 9/445

(54) **MÉTHODE MISE EN OEUVRE PAR ORDINATEUR DE CONCEPTION D'UNE ARCHITECTURE LOGIQUE D'UN SYSTÈME COMPLEXE, ET SYSTÈME DE CONCEPTION ASSOCIÉ**

(30) Priorité: 04.04.2014 FR 1400831
(71) Demandeur: Dassault Aviation, 75008 Paris (FR)
(72) Inventeur: Auge, Thomas, 78220 Viroflay (FR); Branthomme, Arnaud, 78690 St Remy L'Honore (FR)
(74) Mandataire: Blot, Philippe Robert Emile

(57) **Abrégé**

La méthode comporte les étapes suivantes :
- fourniture d'une structuration fonctionnelle comportant une pluralité de fonctions (F1 à F5) à effectuer dans le système complexe ;
- définition, à partir de la structuration fonctionnelle, de services (S1, S2) comportant chacun au moins une fonction (F1 à F5) ;
- pour chaque service, sélection de paramètres associés à chaque fonction (F1 à F5) ;
- association des services définis à l'étape de définition à des composants orientés service (C1, C2) ;
- génération d'un assemblage de composants orientés services sur la base de la structuration fonctionnelle et des services associés à chaque composant orienté service (C1, C2) à l'étape d'association.

## Description

La présente invention concerne une méthode mise en oeuvre par ordinateur de conception d'une architecture logique d'un système complexe.

Une telle méthode est destinée notamment à définir les spécifications d'une architecture à composants logiques orientés service d'un système complexe, de manière cohérente avec une structuration fonctionnelle associée.

La méthode s'applique particulièrement à des architectures logiques d'une plate-forme, notamment pour définir une architecture logicielle au sein de la plate-forme.

Avantageusement, la plate-forme est un aéronef civil ou militaire, ou encore un engin volant, tel qu'un drone. Dans d'autres exemples, la plate-forme est un engin spatial, un engin naval, ou un véhicule terrestre.

La méthode s'applique également à la conception d'une architecture logique d'un système complexe défini par un ensemble de plates-formes interagissant les unes avec les autres, comme un système comportant plusieurs aéronefs, et des ensembles terrestres associés.

Cette méthode s'applique ainsi à des domaines variés, embarqués ou non, et à des composants logiques réalisés par des logiciels ou/et par d'autres technologies.

Dans les systèmes complexes d'aéronefs, les fonctions à effectuer par le système peuvent être nombreuses et interconnectées.

Pour établir l'architecture logicielle, une structuration fonctionnelle définissant l'organisation des fonctions réalisées par les composants du système et la mise en relation entre les fonctions est établie.

L'architecture logicielle est établie sur la base de la structuration fonctionnelle, par exemple en définissant, pour chaque fonction, différentes méthodes logicielles à utiliser. Les méthodes logicielles sont généralement utilisées par plusieurs fonctions. Leurs classifications sont souvent déconnectées de la structure fonctionnelle.

Ainsi, lorsqu'une fonction doit être modifiée au sein du système complexe de la plate-forme, par exemple pour ajouter une fonctionnalité nouvelle ou pour intégrer un nouveau composant, l'architecture logicielle doit être revue dans son ensemble, et le code doit parfois être modifié de manière extensive.

Ceci implique des coûts de développement élevés. De plus, toute modification est rendue complexe du fait de la dissemblance entre la structuration fonctionnelle et l'architecture logique.

Pour pallier ce problème dans les architectures logicielles complexes, il est connu d'utiliser des approches de conception orientée service. Ces approches définissent un assemblage de composants logiciels orientés service reliés par des liens de dépendance entre service fourni et service requis.

Ces approches présentent l'avantage de définir des composants et des services par la nature des interactions entre les composants. Ceci permet de réutiliser facilement certains composants pour réaliser d'autres fonctionnalités et de concevoir les codes associés à chaque composant de manière relativement indépendante.

Toutefois, ces approches orientées services sont souvent définies de manière disjointe par rapport aux méthodes de conception permettant de décrire le fonctionnement d'un système.

Il existe donc un risque d'incohérence entre les définitions prévues d'une part, pour la structuration fonctionnelle et d'autre part, pour l'architecture orientée services. Par ailleurs, une redondance de définitions existe dans certains cas entre les deux méthodes. Il est en outre parfois difficile de réutiliser les composants orientés services définis dans l'architecture orientée service à d'autres fins.

Un but de l'invention est donc d'obtenir une méthode très générale de spécification d'une architecture logique d'un système complexe, qui soit simple et cohérente à mettre en oeuvre, et qui diminue les coûts de conception et de modification.

À cet effet, l'invention a pour objet une méthode du type précité, comportant les étapes suivantes :
- fourniture d'une structuration fonctionnelle comportant une pluralité de fonctions à effectuer dans le système complexe ;
- définition, à partir de la structuration fonctionnelle, de services comportant chacun au moins une fonction ;
- pour chaque service, sélection de paramètres associés à chaque fonction ;
- association des services définis à l'étape de définition à des composants orientés service ;
- génération d'un assemblage de composants orientés services sur la base de la structuration fonctionnelle et des services associés à chaque composant orienté service à l'étape d'association.

La méthode selon l'invention peut comprendre l'une ou plusieurs des caractéristiques suivantes, prise(s) isolément ou suivant toute combinaison techniquement possible :
- l'étape de définition comporte l'attribution d'un type donné d'interaction fonctionnelle à une fonction d'un service pour créer une fonction d'interface de service, l'étape de sélection comprenant avantageusement la sélection de paramètres correspondant au type donné d'interaction fonctionnelle.
- le type donné d'interaction fonctionnelle est choisi parmi une commande, une demande d'information, en particulier une publication et une notification, et une transaction.
- l'étape de définition comporte la création d'un nouveau service comprenant au moins une fonction à effectuer dans le système complexe.
- l'étape de définition comporte l'ajout d'une nouvelle fonction à effectuer dans un service existant.
- l'étape de sélection comporte le chargement d'un service existant à partir d'une base de données de services et la génération d'au moins une fonction associée au service existant chargé.
- elle comporte une étape d'initialisation d'une chaîne fonctionnelle orientée service à partir d'une pluralité de composants orientés service.
- elle comporte, après l'association des services à des composants orientés services, une étape d'identification des contrats de services associés à chaque service d'un composant orienté service sur la base des paramètres identifiés à l'étape d'identification.
- chaque contrat de service comprend une qualité de service et/ou un type informatique de paramètre.
- l'étape de génération d'assemblage comporte une création de liens d'échanges entre chaque composant orienté service.
- l'étape de génération d'assemblage comporte la vérification des contraintes de chaque lien d'échange en fonction des contrats de services associés à chaque composant orienté service.
- elle comporte une étape d'import d'un composant orienté service existant dans une base de données de composants orientés service et une étape de génération des fonctions associées au composant orienté service importé.
- les fonctions à effectuer sont choisies parmi des fonctions électrique, avionique, mécanique, hydraulique du système complexe, la fonction comportant au moins une donnée d'entrée et/ou au moins une donnée de sortie.
- le système complexe est un système d'une plate-forme ou est un système d'un ensemble de plates-formes.
- la structuration fonctionnelle est fournie sous forme informatique ;
- les fonctions sont des fonctions allouables échangeant des données entre elles, constituant au moins une fonction système de rang supérieur ;
- l'étape de fourniture est réalisée par le concepteur, en utilisant l'élément logiciel de fourniture ;
- l'étape de définition est réalisée par le concepteur, en utilisant l'élément logiciel de définition ;
- l'étape de définition comprend la définition, par le concepteur, des interfaces de service associées à chaque service, à l'aide de l'élément logiciel de définition ;
- l'étape de sélection est réalisée par le concepteur en utilisant l'élément logiciel de sélection ;
- le procédé comprend une étape de vérification automatique, pour chaque fonction d'interface de service, de la cohérence des paramètres sélectionnés pour la fonction d'interface de service avec le type donné d'interaction fonctionnelle choisi pour la fonction d'interface de service ;
- le procédé comprend une vérification automatique, dans la structure fonctionnelle des qualités de service définies pour chaque paramètre de la fonction d'interface de service ;
- l'étape de génération comprend la génération automatique d'un assemblage logique de composants orientés services calqué sur la structuration fonctionnelle définie.

L'invention a également pour objet un système de conception d'une architecture logique d'un système complexe, le système de conception comportant une unité centrale de traitement comprenant une mémoire recevant :
- un élément logiciel de fourniture d'une structuration fonctionnelle comportant une pluralité de fonctions à effectuer dans le système complexe ;
- un élément logiciel de définition de services comportant chacun au moins une fonction à effectuer dans le système complexe ;
- un élément logiciel de sélection, pour chaque service, des paramètres de chaque fonction ;
- un élément logiciel d'association des services définis par l'élément logiciel de définition à des composants orientés services ;
- un élément logiciel de génération d'un assemblage de composants orientés service, sur la base de la structuration fonctionnelle et des services associés à chaque composant orienté service par l'élément logiciel d'association ;
   l'unité centrale de traitement comportant un processeur propre à exécuter chaque élément logiciel.
- l'élément logiciel de fourniture est propre à être activé par le concepteur ;
- l'élément logiciel de définition est propre à être activé par le concepteur ;
- l'élément logiciel de sélection est propre à être activé par le concepteur ;
- les fonctions sont mises en oeuvre sur la base d'au moins une donnée d'entrée et/ou sont propres à engendrer une ou plusieurs données de sortie, au moins une donnée

de sortie d'une fonction constituant une donnée d'entrée d'une autre fonction reliée à la fonction considérée par un lien fonctionnel, l'élément de sélection étant propre à permettre la sélection par le concepteur parmi les données d'entrée et/ou de sortie de la fonction, de celles qui sont des paramètres de la fonction d'interface de service et la définition par le concepteur de la qualité de service de chaque paramètre de la fonction d'interface de service ;
- l'élément logiciel d'association est propre à être activé par le concepteur ;
- l'élément logiciel de génération est propre à générer automatiquement l'assemblage logique de composants orientés service sur la base de la structuration et des services associés à chaque composant orientés service par l'élément logiciel d'association, pour réaliser la structuration fonctionnelle ;
- l'élément logiciel d'identification est propre à vérifier la cohérence de la sélection réalisée à l'aide de l'ensemble de sélection vis-à-vis du type attribué d'interaction fonctionnelle ;
- le système comprend un élément logiciel de vérification automatique dans la structuration fonctionnelle de la cohérence des valeurs de qualité de service définies.

L'invention sera mieux comprise à la lecture de la description qui va suivre, donnée uniquement à titre d'exemple, et faite en se référant aux dessins annexés, sur lesquels :
- la figure 1 est une vue schématique d'un premier système de conception selon l'invention destiné à la création et/ou à la modification d'une architecture logique d'un système complexe d'une plate-forme ;
- la figure 2 est une vue d'un écran de conception illustrant une étape de fourniture d'une structuration fonctionnelle du système complexe de la plate-forme dans une méthode de conception selon l'invention ;
- la figure 3 est une vue analogue à la figure 2, illustrant une étape de définition de services dans la structuration fonctionnelle de la figure 1 ;
- la figure 4 est une vue analogue à la figure 2, illustrant une étape d'identification des paramètres associés à chaque fonction de chaque service et de définition des liens entre les paramètres des différents services ;
- la figure 5 est une vue analogue à la figure 2, illustrant une étape d'association des services définis à l'étape de la figure 3 à des composants orientés service ;
- la figure 6 est une vue analogue à la figure 2, illustrant une étape de génération d'assemblage entre les composants orientés service ;
- la figure 7 est une vue analogue à la figure 2 illustrant une étape d'import d'un composant orienté service existant et de génération des fonctions associées à ce composant ;
- la figure 8 est un logigramme illustrant les différentes étapes de la méthode de conception selon l'invention ;
- la figure 9 est une vue d'une décomposition fonctionnelle représentée sous forme arborescente

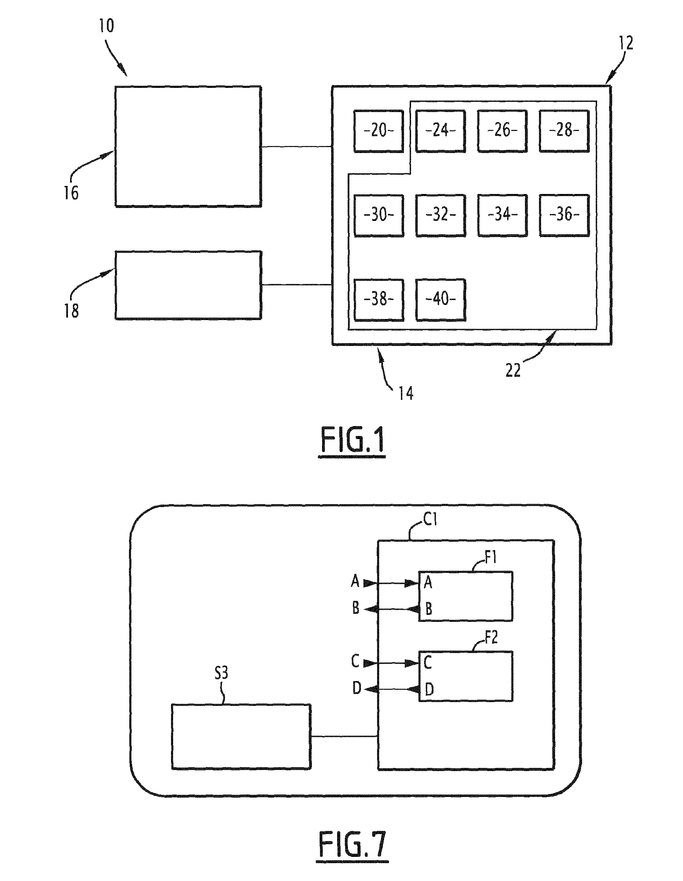

Une première méthode de conception d'une spécification d'architecture logique d'un système complexe est mise en oeuvre à l'aide d'un système 10 illustré par la figure 1.

Le système complexe est un système d'une plate-forme, ou est un système défini par un ensemble de plates-formes interagissant les unes avec les autres

La plate-forme est par exemple un aéronef civil ou militaire, ou encore un engin volant, tel qu'un drone. Dans d'autres exemples, la plate-forme est un engin spatial, un engin naval, ou un véhicule terrestre.

Le système complexe de la plate-forme est par exemple un système de pilotage de la plate-forme, un système de commande de fonctionnalités d'habitacle de la plate-forme, un système d'actionnement d'éléments mobiles de la plate-forme, ou encore un système de largage d'un objet, tel qu'une arme à partir de la plate-forme.

Le système de conception 10 comporte un ordinateur 12, comprenant une unité centrale de traitement 14, un écran d'affichage 16 et une interface homme machine 18, par exemple un clavier, un écran tactile, et/ou une souris.

L'unité centrale 14 comporte un processeur 20 et une mémoire 22 contenant un logiciel propre à être exécuté par le processeur 20 pour la mise en oeuvre du procédé.

La mémoire 22 contient ainsi un élément logiciel 24 de fourniture d'une structuration fonctionnelle du système complexe, la structuration fonctionnelle comportant une pluralité de fonctions, un élément logiciel 26 de définition de services comportant chacun au moins une fonction, et un élément logiciel 28 d'identification, pour chaque service, de paramètres associés à chaque fonction.

La mémoire 22 contient en outre un élément logiciel 30 d'initialisation d'une chaîne fonctionnelle à partir de composants orientés service, un élément logiciel 32 d'association des services définis par l'élément logiciel 26 à partir de la structuration fonctionnelle à des composants orientés service de la chaîne fonctionnelle, un élément logiciel 34 d'identification de contrats de services associés à chaque composant orienté service, et un élément logiciel 36 de génération d'un assemblage de composants orientés service, à partir des services associés à chaque composant orienté service.

La mémoire 22 contient avantageusement un élément logiciel d'accès à une base de données 38 de services existants, et un élément logiciel d'accès à une base de données 40 de composants orientés service existants.

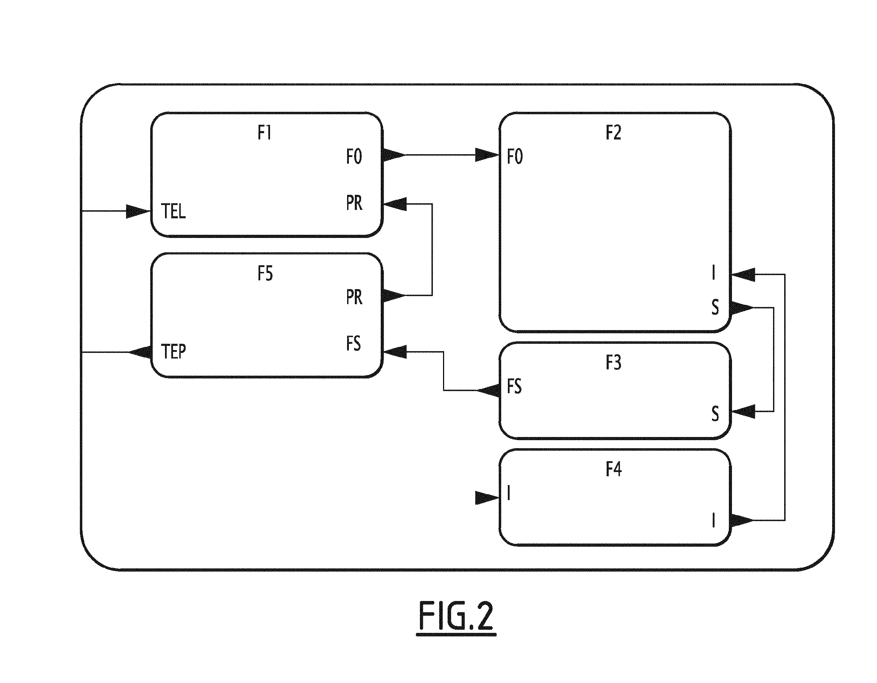

En référence à la figure 2, l'élément logiciel 24 est propre à permettre la création, le chargement, et/ou la modification d'une structuration fonctionnelle comportant une pluralité de fonctions F1 à F5 à effectuer dans le système complexe de la plateforme.

Ces fonctions sont par exemple des fonctions de commande, des fonctions de détermination ou de notification de statut, des fonctions de transactions, ou des fonctions d'alarme, qui seront définies plus bas.

Dans l'exemple d'un système de tir d'une arme, représenté schématiquement sur la figure 2, les fonctions sont par exemple l'exécution d'actions relative à une arme (F1), l'exécution d'une séquence de mise à feu (F2), la notification d'un statut de mise à feu (F3), la définition d'un paramètre d'intervalle (F4), la fourniture d'un paramètre de progression d'action du système de tir (F5).

Les fonctions sont mises en oeuvre généralement sur la base d'au moins une donnée d'entrée qui dépend de la nature de la fonction.

La fonction engendre généralement au moins une donnée de sortie, qui dépend de la nature de la fonction exécutée et qui peut constituer une donnée d'entrée d'une autre fonction reliée à la fonction considérée, par l'intermédiaire d'un lien de transmission.

Des exemples de données d'entrée sont une liste d'exécution de tâches (TEL pour la fonction F1), une donnée d'ordre de feu (FO pour la fonction F2), une donnée d'état (statut S pour la fonction F3 ou progrès P pour la fonction F5).

Des exemples de données de sortie sont une donnée d'ordre de feu, une donnée d'état, ou encore une variable calculée (intervalle I pour la fonction F4).

La structuration fonctionnelle comporte ainsi un ensemble de blocs individuels représentant chacun individuellement une fonction F1 à F5, les données d'entrée et de sortie de chaque fonction F1 à F5 étant définies pour chaque bloc.

La structuration fonctionnelle comporte en outre des liens fonctionnels entre les données de sortie de certaines fonctions et les données d'entrée d'autres fonctions.

L'élément logiciel 26 est propre à permettre la définition, à partir de la structuration fonctionnelle fournie par l'élément logiciel 24, de services comportant chacun au moins une fonction.

L'élément logiciel 26 est ainsi propre à permettre l'association d'au moins une fonction à un service, à partir de la structuration fonctionnelle définie par l'élément logiciel 24 et/ou le chargement d'un service existant comprenant au moins une fonction, à partir de la base de données de services existants 38.

Un service comprend au moins une fonction pouvant être mise en oeuvre sur la base d'un contrat de service entre un client et un fournisseur. Un service peut avantageusement être réutilisé dans différents contextes. Ainsi, les échanges de même nature utilisés par différents composants de l'architecture logique sont regroupés au sein d'un même service.

Le contrat de service est un contrat d'interface fonctionnelle entre le client et le fournisseur, définissant le type de paramètres à échanger, ainsi que la qualité de service des échanges entre les paramètres, notamment la disponibilité, la durée, la fréquence, le vieillissement maximum des données, le rafraîchissement des données, et dans le cas d'une commande, le temps maximal de réponse.

Ces qualités de service sont par exemple issues de standards existants.

Un service est notamment un service fourni par un fournisseur ou un service requis par un client.

L'élément logiciel 26 est propre à créer un nouveau service par l'attribution d'au moins une fonction à ce service.

En variante ou en complément, l'élément logiciel 26 est propre à charger un service existant à partir de la base de données de services 38, ou à partir d'un service extrait d'un composant orienté service présent dans la base de données 40, à générer la ou les fonctions associées à ce service, et à permettre la modification des fonctions associées, ou l'ajout de nouvelles fonctions pour créer le nouveau service.

L'élément logiciel 26 est en outre avantageusement propre à permettre l'attribution d'un type donné d'interaction fonctionnelle à au moins une fonction d'un service donné, pour créer une fonction d'interface de service.

Le type donné d'interaction fonctionnelle est choisi notamment parmi une commande, une demande d'information, en particulier une notification ou une publication, et une transaction.

Une commande permet à un composant client d'ordonner l'exécution d'une action auprès d'un ou plusieurs composants serveur. Cette interaction fonctionnelle comporte au moins un paramètre d'entrée, et peut comporter plusieurs paramètres d'entrée.

Une demande d'information permet à un composant client de recevoir des données en provenance d'un composant serveur. Cette interaction comporte au moins un paramètre de sortie, et avantageusement plusieurs paramètres de sortie.

Cette demande peut prendre plusieurs formes, par exemple :
- une notification permet à un composant serveur d'informer dès que possible des composants clients qu'un événement particulier s'est produit,
- une publication de donnée du serveur vers plusieurs clients.

Une transaction permet à un composant client de réaliser un échange complexe avec un composant serveur, ce composant serveur pouvant répondre à cette sollicitation. La forme la plus simple correspond à une requête de la part du client suivi d'une réponse du serveur. La transaction est par exemple de type question/réponse.

Cette interaction comporte au moins un paramètre d'entrée et de sortie, et peut comporter plusieurs paramètres d'entrée et de sortie.

Le type donné d'interaction fonctionnelle correspond à l'intention fonctionnelle que possède l'entité émettrice de l'interaction auprès de l'entité réceptrice de l'interaction. Cette définition par type donné d'interaction fonctionnelle autorise un découplage avec les mécanismes informatiques sous-jacents.

En outre, le type donné d'interaction fonctionnelle définit la hiérarchie des interactions entre les services, en établissant notamment des liens hiérarchiques entre les clients et les serveurs.

Chaque type donné d'interaction fonctionnelle possède ainsi des directions de paramètres autorisés, par exemple entrée, sortie, entrée - sortie.

L'élément logiciel 28 est propre à identifier, dans le mode fonctionnel, les paramètres des fonctions de chaque service.

Cette opération consiste à sélectionner parmi les données entrantes ou sortantes de la fonction, celles qui sont des paramètres de la fonction d'interface de service et qui à ce titre, seront utilisables par le ou les clients du service.

La sélection des paramètres est conçue pour respecter les contraintes définies dans les types d'interaction fonctionnelle, notamment la direction de la donnée.

L'élément logiciel 28 est propre à définir les types informatiques de chaque paramètre, ainsi que la qualité de chaque paramètre en vue d'établir le contrat de service associé au service donné.

L'élément logiciel 30 est propre à initialiser une chaîne fonctionnelle dans une architecture orientée services à partir de composants orientés service.

L'élément logiciel 30 est ainsi propre à créer ou à charger des composants orientés services C1, C2 dans l'architecture orientée services.

Chaque composant orienté service est un composant logique propre à fournir des services à d'autres composants, et/ou à requérir des services fournis par d'autres composants.

L'élément logiciel 32 est propre à associer, à chaque composant orienté service de la chaîne fonctionnelle dans l'architecture orientée service au moins un service défini par l'élément logiciel 26, à partir de la structuration fonctionnelle. Comme indiqué précédemment, le service défini à partir de la structuration fonctionnelle peut être un service fourni ou un service requis.

L'élément logiciel 34 est propre à identifier les contrats de services associés à chaque service, depuis la structuration fonctionnelle, tel qu'identifiée par l'élément logiciel 28, en définissant le type informatique des paramètres manipulés par le service, et les qualités de service.

L'élément logiciel 36 est propre à générer un assemblage entre les composants orientés service définis par l'élément logiciel 30 auxquels ont été associés les services correspondants de la structuration fonctionnelle à l'aide de l'élément logiciel 32.

L'élément logiciel 36 est propre à définir les liens d'échanges entre chaque composant orienté service, et à vérifier les contraintes de chaque lien d'échange, en fonction des contrats de service associés à chaque service du composant orienté service.

En particulier, l'élément logiciel 36 est propre à déterminer si un lien d'échange est apte à être établi entre un service requis par un premier composant orienté service et un service fourni par un deuxième composant orienté service, sur la base des paramètres associés à ces services et du contrat de services correspondant.

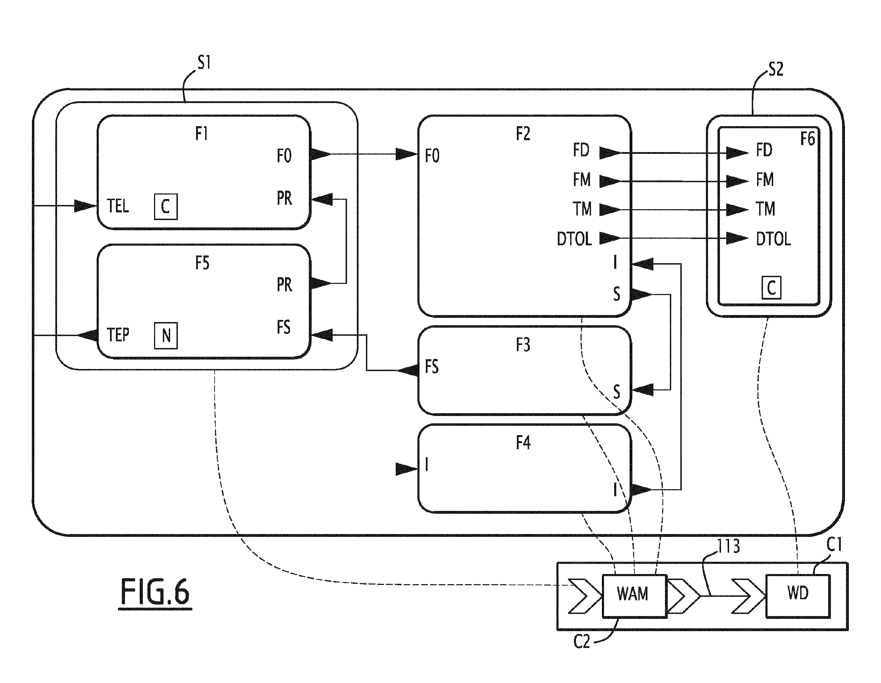

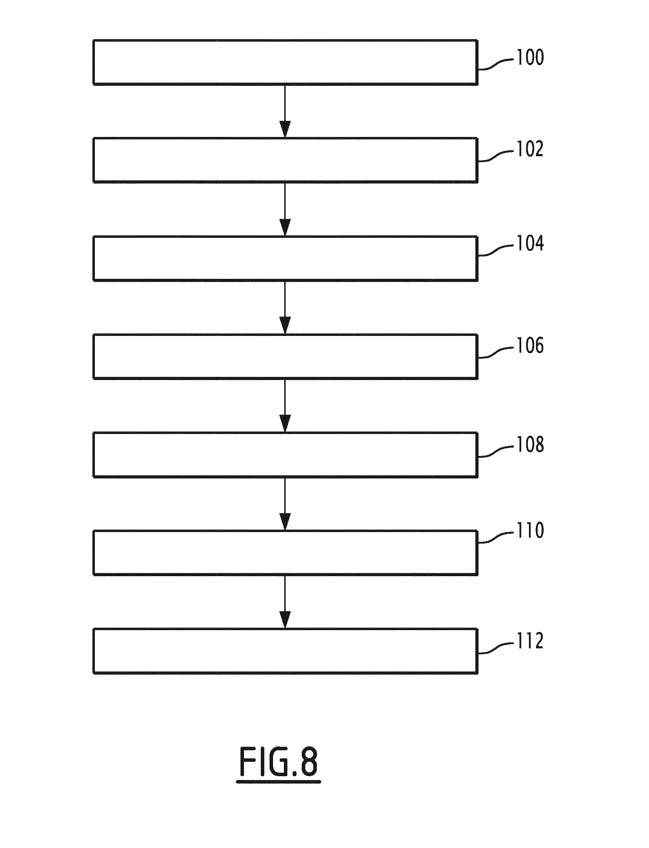

Une première méthode de conception selon l'invention, mise en oeuvre à l'aide du système 10, va maintenant être décrite, en regard des figures 2 à 6 et du logigramme de la figure 8.

Initialement, la méthode comporte la fourniture 100, à l'aide de l'élément logiciel 24 d'une structuration fonctionnelle comportant une pluralité de fonctions à effectuer dans le système complexe.

La structuration fonctionnelle est par exemple créée de toutes pièces. En variante ou en complément, elle est chargée à partir d'une structuration connue, puis modifiée. Un exemple de structuration fonctionnelle est illustré sur la figure 2, dans laquelle une pluralité de fonctions F1 à F5 est interconnectée.

Puis, la méthode comporte la définition 102 de services S1 et S2 comportant chacun au moins une fonction F1, F5, F6.

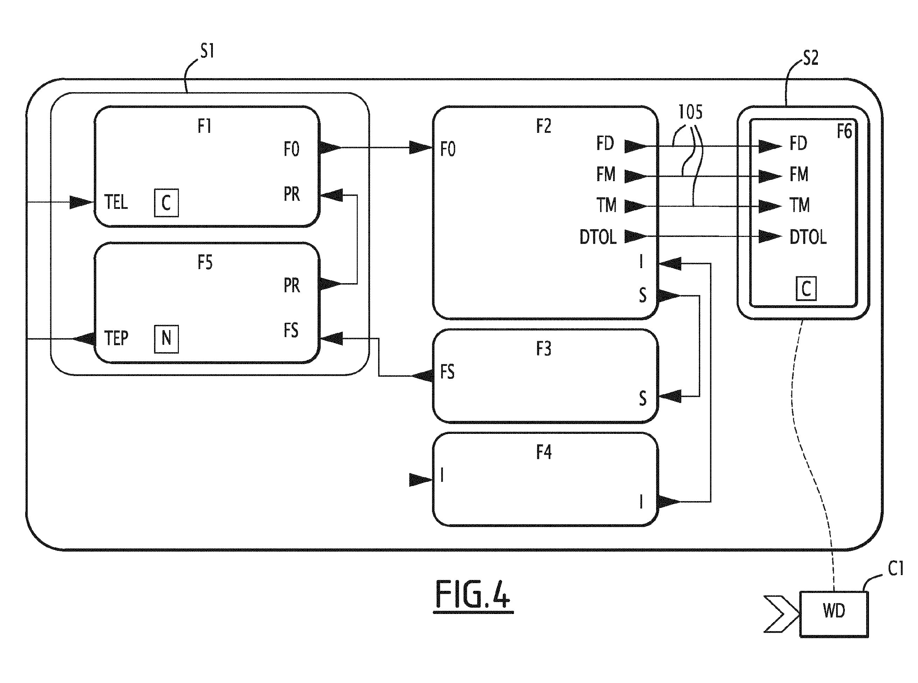

Un premier service S1 est créé par attribution d'au moins une fonction F1, F5 à ce service, comme illustre par la figure 4.

Dans cet exemple, au moins une fonction F2 reste non associée à un service, tout en étant raccordée à au moins une fonction F1 d'un service S1 défini.

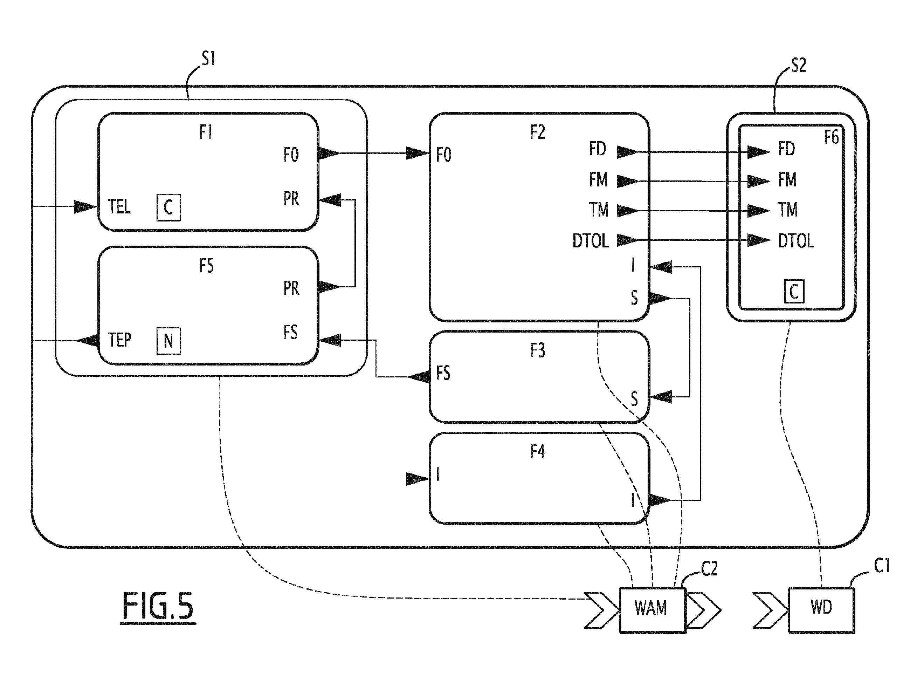

Un deuxième service S2 est défini avantageusement par chargement d'un service dans la base de données 38 de services existants, ou par chargement d'un service associé à un composant orienté service C1 issu de la base de données 40 de composants orientés services, comme illustré par la figure 5.

Le deuxième service S2 comporte au moins une fonction F6.

Si nécessaire, le service S2 est modifié par l'ajout d'une nouvelle fonction dans le service, ou par modification d'une fonction existante du service.

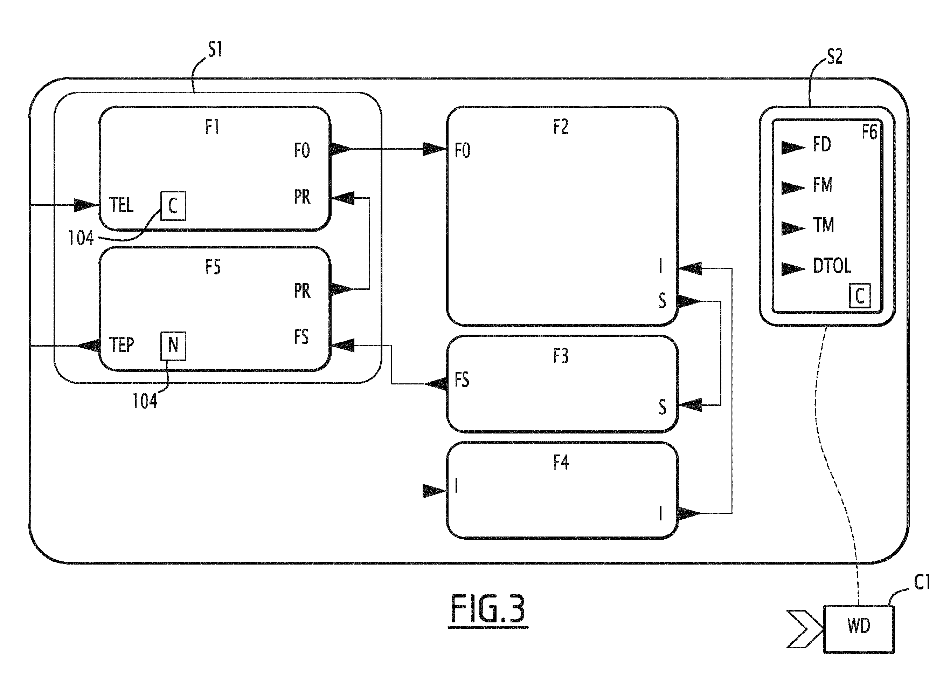

En référence à la figure 3, l'étape de définition 102 comporte avantageusement l'attribution d'un type donné d'interaction fonctionnelle à au moins une fonction F1, F5 d'un service S1 pour créer une fonction d'interface de service.

Comme précisé plus haut, le type donné d'interaction fonctionnelle attribué à la fonction est choisi par exemple parmi une commande, une demande d'information, en particulier une publication ou une notification, et une transaction.

Un indicateur 103 du type d'interaction fonctionnelle est alors associé à la fonction F1, F5 et à sa représentation sous forme de boîte fonctionnelle.

Ensuite, la méthode comporte la sélection 104 des paramètres, notamment des paramètres d'entrée et de sortie, de chaque fonction F1, F5 d'un service S1. À ce titre, les paramètres de la fonction d'interface de service sont sélectionnés parmi les données entrantes ou/et sortantes de la fonction.

Cette sélection respecte les contraintes définies dans les types d'interactions fonctionnelles, et notamment la direction de la donnée.

La sélection 104 comporte en outre l'établissement des qualités de services et de type informatique des paramètres nécessaires à la mise en oeuvre de la fonction.

L'étape de définition 102 comporte en outre avantageusement la connexion d'au moins un service S2 à une fonction F2 associées ou non à un service par des liens fonctionnels 105 entre des paramètres.

La méthode comporte ensuite, en regard de la figure 5, une initialisation 106, par l'élément logiciel 30, d'une chaîne fonctionnelle orientée services comportant une pluralité de composants orientés services C1, C2, visibles en bas de la figure 5.

Cette chaîne fonctionnelle est créée de toutes pièces ou est chargée partiellement ou totalement à partir d'une base de données de chaînes fonctionnelles.

Le procédé comporte alors l'association 108 par l'élément logiciel 32, des services définis lors de l'étape de définition 102, à partir de la structuration fonctionnelle, à des composants orientés services C1, C2.

Ces services peuvent être des services requis ou des services fournis.

La méthode comporte alors une identification 110, par l'élément logiciel 34, des contrats de service associés à chaque service d'un composant orienté service, en fonction des paramètres identifiés à l'étape 104 à partir de la structuration fonctionnelle.

Ces contrats de services tiennent compte de la qualité de service requise, et du type informatique des paramètres identifiés à l'étape d'identification 104.

Ensuite, la méthode comporte une génération 112, par l'élément logiciel 36 d'un assemblage de composants orientés services C1, C2, sur la base des services associés à chaque composant orienté service C1, C2 à l'étape d'association.

La génération 112 comporte une définition des liens d'échanges 113 entre chaque composant orienté service C1, C2, et la vérification des contraintes de chaque lien d'échange, en fonction des contrats de services associés à chaque service d'un composant orienté service C1, C2, identifié à l'étape d'identification 110 par l'élément logiciel 34.

Une architecture logique orientée service est alors obtenue, sur la base de services définis à partir de la structuration fonctionnelle.

Il est alors possible d'analyser l'architecture obtenue, et/ou de générer une définition en vue d'un codage sur la base d'une architecture orientée service, en maintenant une cohérence entre la définition orientée service et la structuration fonctionnelle. En effet, les services et les fonctions définis à partir de la structuration fonctionnelle sont projetés directement sur l'architecture orientée service.

Les interactions fonctionnelles au sein de la structuration fonctionnelle sont avantageusement regroupées par type et sont caractérisés en fonction de leur nature et de leur qualité. Il est alors possible de découpler les intentions fonctionnelles avec les mécanismes informatiques sous-jacents, et avec le codage particulier de chaque fonction.

Un modèle enrichi est ainsi obtenu, pour supporter les méthodes de conception par description de chaîne fonctionnelle et assemblage de composants orientés services.

Ce modèle unique peut cependant être utilisé à la fois du point de vue orienté service et du point de vue fonctionnel, avec une relation directe entre les points de vue.

Dans une variante, une nouvelle fonction est ajoutée dans un service directement dans la chaîne fonctionnelle existante, qui peut avoir été créée précédemment, ou avoir été chargée.

Dans une autre variante, un composant orienté service existant est importé, et les fonctions associées à ce composant, au sein des services du composant sont générées, en vue d'être utilisées pour la conception d'une autre architecture logique.

Dans l'exemple qui vient d'être décrit, les fonctions F1 à F5 sont avantageusement des fonctions allouables échangeant des données entre elles. Par « fonction allouable », on entend une fonction pouvant être réalisée par un composant unique.

Les fonctions allouables sont mises en oeuvre sur la base d'au moins une donnée d'entrée et/ou sont propres à engendrer une donnée de sortie, comme précisé précédemment. Elles définissent la structuration fonctionnelle d'une fonction système.

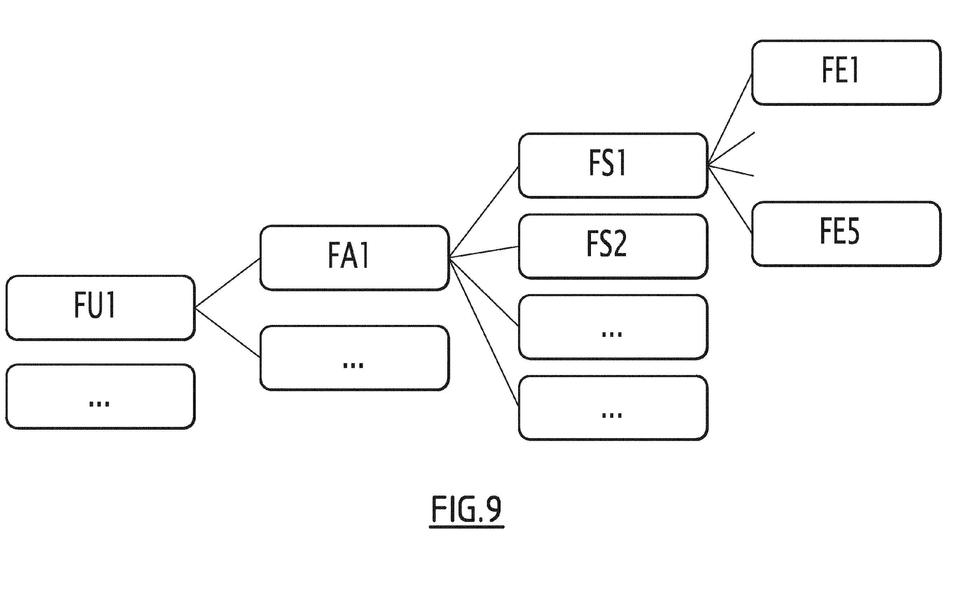

Comme illustré sur la figure 9, les fonctions systèmes FS1, FS2 résultent de la décomposition fonctionnelle sous forme d'une représentation arborescente d'une fonction attendue FA1 de niveau supérieur, laquelle résulte d'une fonction utilisateur final FU1 de niveau encore supérieur.

Un exemple de fonction utilisateur final est par exemple « contrôler le déplacement avion » résultant en une pluralité de fonctions attendues qui comprennent par exemple « contrôler les attitudes de l'avion », les fonctions attendues étant nécessaires pour la réalisation de la fonction utilisateur. La fonction attendue nécessite des fonctions systèmes FS1, FS2 qui sont par exemple «contrôler l'inclinaison » ou « contrôler le roulis ». La fonction FS1 nécessite elle-même une pluralité de fonctions élémentaires ou allouables FE1, FE5 qui sont par exemple « mesurer l'inclinaison de l'avion » et « modifier la position de la gouverne de profondeur ».

La structuration fonctionnelle est fournie par le concepteur sous forme informatique à l'aide de l'élément logiciel de fourniture 24, par changement ou création comme décrit plus haut. La structuration est par exemple introduite sous forme d'une base de données de type PLM ou de fichiers de format XML préparés notamment à l'aide du logiciel servant à la définition fonctionnelle.

L'étape de définition 102 est de préférence réalisée par le concepteur et comporte, la définition de services, mais également d'interfaces de services associées aux services en sélectionnant dans la structuration fonctionnelle les fonctions utilisables pour définir des fonctions d'interface de service. L'attribution du type donné d'interaction fonctionnelle à une fonction d'un service est de préférence réalisée par le concepteur. De même, le concepteur sélectionne les paramètres de la fonction d'interface de service correspondant au type donné d'interaction fonctionnelle.

La méthode selon l'invention comprend avantageusement une étape de vérification automatique, par l'élément logiciel de sélection 28, pour chaque fonction d'interface de service, de la cohérence de la sélection des paramètres de la fonction d'interface de service faite par le concepteur vis-à-vis du type attribué d'interaction fonctionnelle.

De préférence, l'élément logiciel de sélection 28 empêche le concepteur de sélectionner un paramètre, par exemple une donnée d'entrée ou une donnée de sortie, inadapté au type d'interaction fonctionnelle associé à la fonction d'interface de service.

Pour chaque fonction d'interface de service, comme indiqué plus haut, le concepteur est propre à définir la valeur des qualités de service associées à chaque fonction d'interface de service. L'élément logiciel de sélection est propre à vérifier automatiquement la cohérence des valeurs de qualité de service définies pour chacun des paramètres, par exemple en les bornant par rapport à une base de données de valeurs de qualités de services connues, ou en vérifiant qu'une fonction de service nécessitant une qualité de service déterminée (par exemple une mise à jour de ses données d'entrée toutes les dix secondes) n'est pas liée à une fonction de service ayant une qualité de service inférieure (par exemple une mise à jour toutes les trente secondes de ses données de sortie).

L'étape d'association des services définis à l'étape de définition à des composants orientés services, est avantageusement réalisée par le concepteur.

Les composants orientés services sont avantageusement standardisés dans leur définition et dans leur type informatique. Ils comprennent au moins une définition des interfaces avec d'autres composants, sans nécessairement comprendre le contenu codé des services qu'ils incluent.

Comme indiqué plus haut, les composants sont avantageusement créés de toute pièce par le concepteur ou sont chargés partiellement ou totalement à partir d'une base de données de chaines fonctionnelles.

L'étape de génération automatique d'un assemblage logique de composants orientés services est générée automatiquement en tenant compte des services associés à chaque composant et en raccordant entre eux ces services pour réaliser la structuration fonctionnelle sous-jacente. Le résultat obtenu est une architecture logique, obtenue sous forme d'un fichier informatique dans laquelle sont définis les différents composants orientés services, les services associés à chaque composant, calqués sur la structuration fonctionnelle, et les liens entre les composants.

L'architecture logique est calquée sur la structuration fonctionnelle par la présence pour chaque service, d'une fonction d'interface de service résultant d'une interaction fonctionnelle choisie et comprenant des paramètres associés à ce type d'interaction fonctionnelle, choisis parmi des données d'entrée et/ou des données de fonctions définies dans la structuration fonctionnelle.

## Revendications

1. Méthode mise en oeuvre par ordinateur de conception d'une architecture logique d'un système complexe, comportant les étapes suivantes :
- fourniture (100) d'une structuration fonctionnelle comportant une pluralité de fonctions à effectuer dans le système complexe ;
- définition (102), à partir de la structuration fonctionnelle, de services comportant chacun au moins une fonction ;
- pour chaque service, sélection (104) de paramètres associés à chaque fonction l'étape de définition (102) comportant l'attribution d'un type donné d'interaction fonctionnelle à une fonction d'un service pour créer une fonction d'interface de service, l'étape de sélection (104) comprenant la sélection de paramètres de la fonction d'interface de service correspondant au type donné d'interaction fonctionnelle ;
- association (108) des services définis à l'étape de définition (102) à des composants orientés service ;
- génération (112) d'un assemblage de composants orientés services sur la base de la structuration fonctionnelle et des services associés à chaque composant orienté service à l'étape d'association (108).

2. Méthode selon la revendication 1, dans laquelle la pluralité de fonctions de la structuration fonctionnelle comprend des fonctions mises en oeuvre sur la base d'au moins une donnée d'entrée et/ou étant propre à engendrer une ou plusieurs données de sortie, au moins une donnée de sortie d'une fonction constituant une donnée d'entrée d'une autre fonction reliée à la fonction considérée par l'intermédiaire d'un lien de transmission de données, la sélection de paramètres de fonction d'interface de service comprenant la sélection parmi des données d'entrées et/ou les données de sortie de la fonction, de celles qui sont des paramètres de la fonction d'interface de service et la définition de la qualité de service de chaque paramètre de la fonction d'interface de service.

3. Méthode selon la revendication 1 ou 2, **caractérisée en ce que** le type donné d'interaction fonctionnelle est choisi parmi une commande, une demande d'information, en particulier une publication et une notification, et une transaction.

4. Méthode selon l'une quelconque des revendications précédentes, **caractérisée en ce que** l'étape de définition (102) comporte la création d'un nouveau service comprenant au moins une fonction à effectuer dans le système complexe.

5. Méthode selon l'une quelconque des revendications précédentes, **caractérisée en ce que** l'étape de définition (102) comporte l'ajout d'une nouvelle fonction à effectuer dans un service existant.

6. Méthode selon l'une quelconque des revendications précédentes, **caractérisée en ce que** l'étape de sélection (104) comporte le chargement d'un service existant à partir d'une base de données (38) de services et la génération d'au moins une fonction associée au service existant chargé.

7. Méthode selon l'une quelconque des revendications précédentes, **caractérisée en ce qu'**il comporte une étape d'initialisation (106) d'une chaîne fonctionnelle orientée service à partir d'une pluralité de composants orientés service.

8. Méthode selon l'une quelconque des revendications précédentes, **caractérisée en ce qu'**elle comporte, après l'association des services à des composants orientés services, une étape d'identification (110) des contrats de services associés à chaque service d'un composant orienté service sur la base des paramètres identifiés à l'étape d'identification (104).

9. Méthode selon la revendication 8, **caractérisée en ce que** chaque contrat de service comprend une qualité de service et/ou un type informatique de paramètre.

10. Méthode selon l'une quelconque des revendications précédentes, **caractérisée en ce que** l'étape de génération d'assemblage (112) comporte une création de liens d'échanges entre chaque composant orienté service.

11. Méthode selon la revendication 10, **caractérisée en ce que** l'étape de génération d'assemblage (112) comporte la vérification des contraintes de chaque lien d'échange en fonction des contrats de services associés à chaque composant orienté service.

12. Méthode selon l'une quelconque des revendications précédentes, **caractérisée en ce qu'**elle comporte une étape d'import d'un composant orienté service existant dans une base de données (40) de composants orientés service et une étape de génération des fonctions associées au composant orienté service importé.

13. Méthode selon l'une quelconque des revendications précédentes, **caractérisée en ce que** les fonctions à effectuer sont choisies parmi des fonctions électriques, avionique, mécanique, hydraulique du système complexe, la fonction comportant au moins une donnée d'entrée et/ou au moins une donnée de sortie.

14. Méthode selon l'une quelconque des revendications précédentes, **caractérisée en ce que** le système complexe est un système d'une plate-forme ou est un système d'un ensemble de plates-formes.

15. Système (10) de conception d'une architecture logique d'un système complexe, le système de conception (10) comportant une unité centrale de traitement (14) comprenant une mémoire (22) recevant :
- un élément logiciel (24) de fourniture d'une structuration fonctionnelle comportant une pluralité de fonctions à effectuer dans le système complexe ;
- un élément logiciel (26) de définition de services comportant chacun au moins une fonction à effectuer dans le système complexe, l'élément logiciel de définition étant propre à permettre l'attribution d'un type donné d'interaction fonctionnelle à une fonction d'un service pour créer une fonction d'interface de service, l'élément de sélection étant propre à permettre la sélection de paramètres de la fonction d'interface de service correspondant au type donné d'interaction fonctionnelle ;
- un élément logiciel (28) de sélection, pour chaque service, des paramètres de chaque fonction ;
- un élément logiciel (32) d'association des services définis par l'élément logiciel (26) de définition à des composants orientés services ;
- un élément logiciel (36) de génération d'un assemblage de composants orientés services, sur la base de la structuration fonctionnelle et des services associés à chaque composant orienté service par l'élément logiciel (32) d'association ;
l'unité centrale de traitement (14) comportant un processeur (20) propre à exécuter chaque élément logiciel.
